# EUROPEAN PATENT APPLICATION

(11) **EP 2 807 950 A1**
(43) Date of publication of application: **03.12.2014**
(21) Application number: 14167522.3
(22) Date of filing: 08.05.2014
(51) Int. Cl.: A47B 47/06, A47F 5/11, F16B 12/40, F16B 12/12, F16B 12/02

(54) **Building system with profile, beam and fitting piece**

(30) Priority: 30.05.2013 NL 2010892
(71) Applicant: Batenburg, Rudolphus Franciscus, 5672 SC Nuenen (NL); Leurink, Toon, 7396 AM Terwolde (NL); Leurink, Henry, 7396 BM Terwolde (NL)
(72) Inventor: Batenburg, Rudolphus Franciscus, 5672 SC Nuenen (NL); Leurink, Toon, 7396 AM Terwolde (NL); Leurink, Henry, 7396 BM Terwolde (NL)
(74) Representative: Klavers, Cornelis

(57) **Abstract**

A building system for walls, fences, showcases, bookcases, furniture, and the like, comprising a hollow, elongated profile (2) in the circumference of which at least one opening (4) is made, a beam (3) to be inserted through the opening into the profile, and a fitting piece (5) that can slide along the length of the profile. The external form of the fitting piece (5) fits with the internal form of the hollow profile (2), and it is shaped to at least partially grip around part of the beam (3) inserted into the profile.

## Description

This invention relates to a building system, for example for walls, fences or furniture, etc.

Such a building system is generally known, but the known systems for building and connecting components of the building system leave something to be desired with regard to stability, load capacity, tolerances and speed of assembly and disassembly, especially when using more uncommon building materials.

The purpose of this invention is to provide a building system that is improved in the aforementioned points, which can be assembled and disassembled without screws or similar fasteners if desired, and furthermore can be made primarily out of cardboard and/or wood at a favourable cost.

To this end, the building system according to the invention has the respective characteristics of claim 1 and the alternative of claim 13.

In principle, the components of the building system are detachable, connectable and reusable, as well as being lightweight. The building system according to the invention can therefore be applied, among other things, in easily portable furniture, freestanding movable walls such as temporary partitions or hanging walls, fences, cabinets such as display cabinets or bookcases, and the like. Although the components of the building system and the furniture that is built out of it are lightweight, the specific screwless joint between the profile and beam have little play and can be loaded stably. This internally binding joint makes use of a fitting piece that can slide along the length of the profile, of which the external form fits with the internal form of the hollow profile. Because the fitting piece is enclosed entirely within the hollow profile, this produces a number of adjoining mating surfaces extending along the length of the hollow profile over a large internal area between the form piece, the internal profile and the part of the beam inserted into the opening. The fitting piece at least partially around the part of the beam protruding into the profile provides a strong, detachable, lightweight connection of the components of the building system according to the invention that is moreover not visible from the outside. The advantage of the building system according to the invention is further that if desired, this can actually be made up almost entirely of relatively cheap cardboard while retaining good mechanical loading properties.

An embodiment of the building system according to the invention has the characteristic from claim 2.

An advantage of this is that a virtually completely form-locked joint can be created between the fitting piece and the part of the beam inserted into the profile, which causes it to be locked into the profile and unable to fall out unintentionally.

Further detailed possible embodiments that are set out in the other claims are listed together with the corresponding advantages in the description below.

The building system according to this invention will now be explained further on the basis of the figures below, in which corresponding components are denoted with the same reference numbers, where:
Figure 1 shows a possible way in which a vertical profile and a part of a beam can clamp together within the profile by means of a fitting piece in the building system according to the invention; and
Figures 2A and 2B show an example of a building system according to the invention assembled in the way shown in fig. 1;
Figures 3A and 3B show another joint clamping method used in the building system according to the invention; and
Figures 4A, 4B, 4C and 4D show examples of embodiments of foot pieces for linking profiles suitable for use in the building system according to the invention.

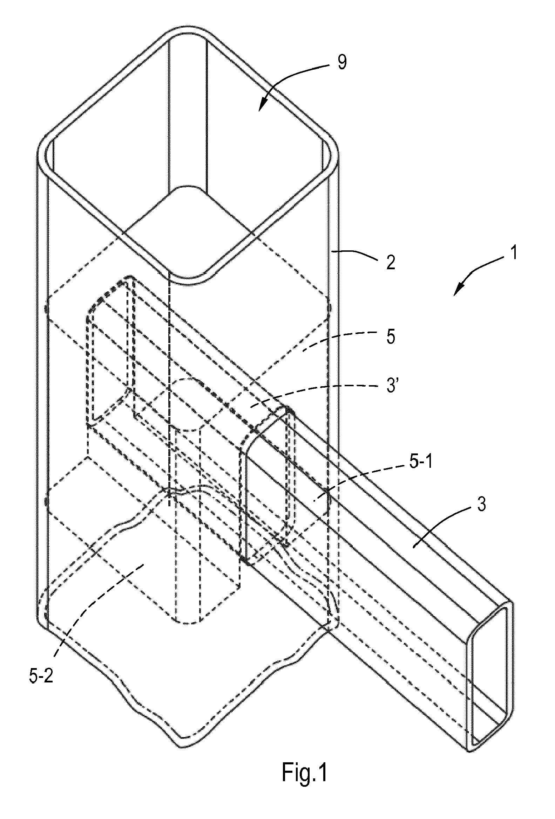

Figure 1 shows a way in which, in a building system 1, a profile 2, here a vertical profile, can be connected detachably if desired, in this case with a beam 3. Examples in which such a building system can be used include but are not limited to: standing walls, hanging walls, partitions, fences, showcases, bookcases, shelving units, glass display cases, clothing racks, trade show stands, and other furniture including tables, chairs and the like. If these are provided with a protective coating, exterior use is in principle also possible.

In particular, the building system 1 comprises a hollow elongated profile 2 fully or partially made of plastic or cardboard for example, in the wall of which at least one opening 4 is made, and a beam section 3' extending through the opening 4 into the profile 2. The cross section of the hollow profile 2 can for example be polygonal, square, rectangular or round. The entire beam 3 or only the beam section 3' can be formed out of or clad with cardboard and possibly have a core material made of wood or another lightweight material. The core material can, aside from wood of cardboard for example, contain a lightweight plastic that may be surrounded by one or more layers of cardboard.

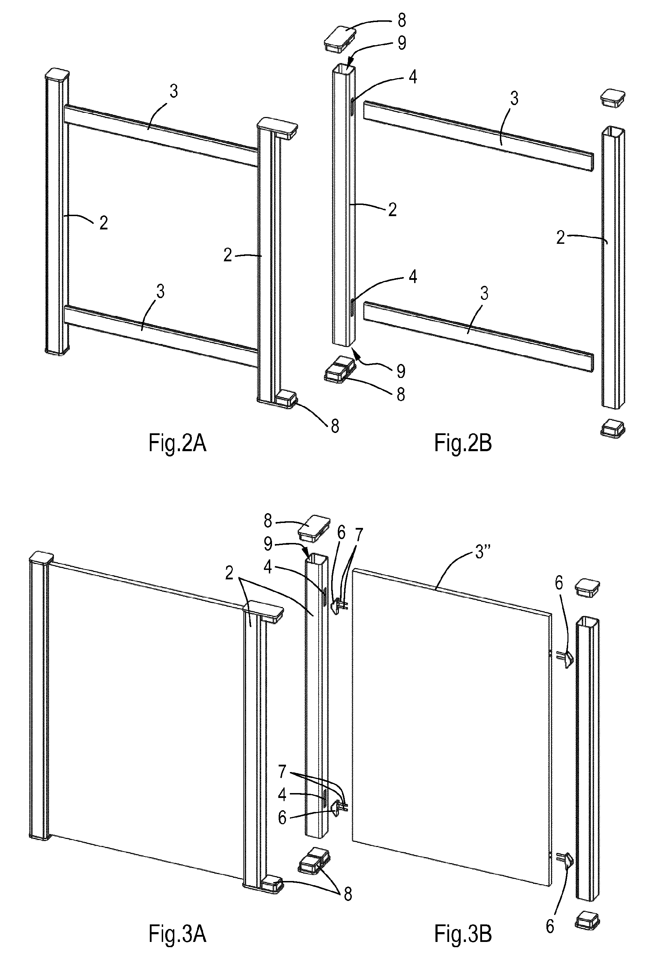

The building system 1 further comprises a fitting piece 5 that can slide in the length direction of the profile 2, often in the vertical direction, of which the external form fits with the internal form of the hollow profile 2. The fitting piece 5 is further formed to at least partially clamp around the internal part 3' of the beam 3 protruding into the profile 2. This can create a virtually completely internally and externally form-locked joint. For example, if the fitting piece 5 has a U-shape as shown in figure 1, both legs 5-1, 5-2 of the U fully or partially extend around both sides of the internal beam section 3'. The outer sides of the legs 5-1 and 5-2 are usually lightly clamped against the internal surface of the hollow profile 2. This causes the beam 3 and its section 3' to be placed firmly in the fitting piece 5. The same applies to the other end of the beam 3 that is not shown in fig. 1 but is shown in figures 2A and 2B. For example, a glue or hot melt adhesive can be poured into the vertical profile 2 to make the connection even more solid, but then the components of the semi-permanent building system 1 are generally only destructively removable. The fitting piece 5 could potentially consist of a number of separate parts that may or may not be interconnectable.

Panels 3" can also be fastened to the beams 3 from figures 2A and 2B. Suitable removable fastening methods use hooks fastened to the panels (not shown) that are hung over the beams 3. Optionally, the panels 3" can be screwed securely to the beams 3.

In one embodiment, the fitting piece 5 can also be form-locking, similar to a dovetail for example. Without using glue, the beam 3 cannot be pulled out of the opening 4 until the locking fitting piece 5 is removed from the beam section 3'. In that case, the fitting piece 5 and its shaped part 3' of the beam 3 protruding into or around the profile 2 are designed as complementary parts of a dovetail-like shape. Other similar complementary locking forms to prevent the beam 3 from sliding out of the profile 2 are conceivable. The fitting piece can be V-shaped.

In general, the shape of the opening 4 in the exterior surface of the profile 3 will correspond with the external shape of the part 3' of the beam 3 to be inserted into the profile 2. This is in part for aesthetic reasons, while this also increases strength.

Another way of gripping the beam 3 and profile 2 is explained on the basis of figures 3A and 3B. Down-pointing hooks 6 are affixed to the beam part 3' or, as shown in the aforementioned figures, to the side of a beam, which can be further made of cardboard, shown as an example here as a beam wall panel 3". Whether the panels 3" are made of cardboard which may or may not be externally finished and the hooks 6 are made of wood, for example plywood, then holes can be made in the sides of the beams 3 or panels 3", into which hooks 6 provided with dowels 7 can be glued. The hooks 6 can then simply be hung in the aforementioned openings 4. When the hooks 6 slide downwards slightly, they clamp tight to the bottom part of the opening 4, but are still removable.

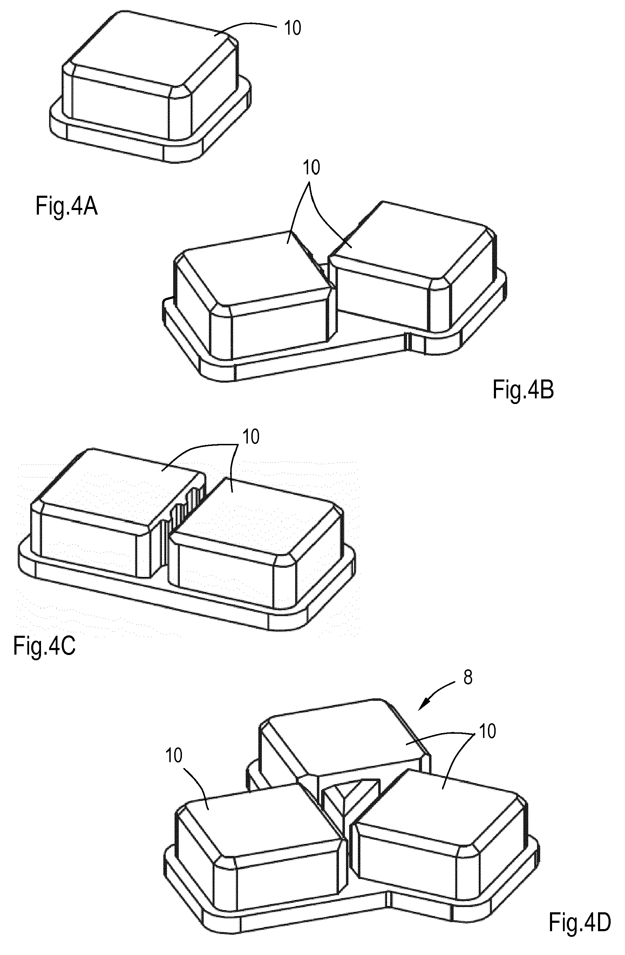

Figures 2 and 3, and especially figures 4A, 4B, 4C and 4D, show several examples of foot pieces 8 that are suitable for closing the end of a profile 2 or for linking adjoining profiles 2. The vertical profile 2 has an open end 9 for this into which the shape of the vertical profiling 10 on the foot pieces 8 fits. The external shape of the profiling 10 fits, usually with some clamping, with the internal shape of the open end 9 of the hollow profile 2. With such foot pieces 8, vertical standing profiles 2 can be securely linked at a certain angle to each other.

Where cardboard is used for this, this should preferably be layers of cardboard which may or may not be glued together and/or corrugated or ridged cardboard, solid cardboard, strawboard, or the like. Instead of cardboard, other lightweight materials can be used if desired such as plastic and/or plastic foam materials. In this way, the foot or coupling pieces 8 can be milled out of soft foam such as a flexible EPE (expanded polyethylene) or 'Eperam' material.

## Claims

1. Building system for example for walls, fences or furniture, comprising:
- a hollow, long profile in the outside of which at least one opening is made,
- a beam to be inserted through the opening into the profile, and
- a fitting piece that can slide along the length of the profile of which the external form fits with the internal form of the hollow profile, and that is shaped to grip at least partially around the part of the beam inserted into the profile.

2. Building system according to claim 1, **characterised in that** the fitting piece is form-fitting, for example by means of a dovetail that grips in or around the complementary shaped part of the beam protruding into the profile.

3. Building system according to claim 1 or 2, **characterised in that** the hollow profile is entirely or partially made of cardboard and/or the fitting part is made of layers of cardboard.

4. Building system according to one of claims 1-3, **characterised in that** at least the outside of the beam contains cardboard.

5. Building system according to one of claims 1-4 **characterised in that** the beam has a core material made for example of wood, cardboard or plastic that is surrounded by cardboard.

6. Building system according to one of claims 1-5 **characterised in that** the shape of the opening in the profile corresponds with the external form of the part of the beam to be inserted into the profile.

7. Building system according to one of claims 1-6 **characterised in that** the profile is a vertical profile, in which the fitting piece can slide in the vertical direction.

8. Building system according to one of claims 1-7 **characterised in that** the fitting piece has a shape, for example a U-shaped or V-shaped cross section, that is specifically complementary to the shape of the part of the beam protruding into the profile.

9. Building system according to one of claims 1-8 **characterised in that** the building system contains glue that is at least applied to the fitting piece clamping inside the hollow profile.

10. Building system according to one of claims 1-9 **characterised in that** the beam forms part of a wall or a panel fastened to the beam.

11. Building system according to one of claims 1-10 **characterised in that** the fitting piece is made of parts that may or may not be interconnectable.

12. Building system according to one of claims 1-9 **characterised in that** the aforementioned cardboard is made of layers of cardboard that may or may not be glued together, and/or is made up of corrugated or ridged cardboard, solid cardboard, strawboard, or the like.

13. Building system for example for walls, fences, or furniture, comprising:
- a hollow, elongated profile that is a vertical profile in the circumference of which at least one opening is made,
- a wall profile that is provided with hooks on its side that reach to the inside of the vertical profile via the opening that clamp to the bottom part of the opening.

14. Building system according to one of the claims 1-13 **characterised in that** the cross section of the hollow profile is polygonal, square, rectangular or round.

15. Building system according to one of claims 1-14 **characterised in that** the end of the hollow profile is open, and that the building system has a foot piece with at least two vertical mouldings on it of which the external form fits with the internal form of the open end of the hollow profile.
